# EUROPEAN PATENT SPECIFICATION

(11) **EP 0 767 080 B1**
(45) Date of publication and mention of the grant of the patent: **23.04.2003**
(21) Application number: 96115826.8
(22) Date of filing: 02.10.1996
(51) Int. Cl.: B60G 21/06, F16L 29/00

(54) **Coupling device, hydraulic system and method of installing same**
Kupplungsvorrichtung,hydraulisches System und Installierungsverfahren dieses Systems
Dispositif de raccordement, système hydraulique et méthode d'installation d'un tel système

(30) Priority: 02.10.1995 JP 25497495
(43) Date of publication of application: 09.04.1997
(73) Proprietor: YAMAHA HATSUDOKI KABUSHIKI KAISHA, Iwata-shi Shizuoka-ken, 438 (JP)
(72) Inventor: Makoto, Kurachi, Iwata-shi, Shizuoka-ken (JP); Mineo, Yamamoto, Iwata-shi, Shizuoka-ken (JP)
(74) Representative: Grünecker, Kinkeldey, Stockmair & Schwanhäusser Anwaltssozietät

(56) References cited:
- DE-C- 733 536
- FR-A- 780 846
- FR-A- 1 032 689
- US-A- 2 372 820
- US-A- 4 049 251
- PATENT ABSTRACTS OF JAPAN vol. 018, no. 319 (M-1623), 17 June 1994 & JP 06 072127 A (YAMAHA MOTOR CO LTD), 15 March 1994,

## Description

The present invention relates to a coupling device for releasably connecting hydraulic lines according to the preamble portion of claim 1, a hydraulic system for a vehicle comprising at least one shock absorber connected to a first hydraulic line according to the preamble portion of claim 6, and a method for installing such a hydraulic system at a vehicle.

In the prior art, hydraulic shock absorbers that are connected to a separate hydraulic apparatus for adjusting their damping have been employed in the front and rear suspensions on the left and right sides of vehicles. The foregoing hydraulic apparatus used in this type of suspension apparatus is usually affixed to the underside of the vehicle between the foregoing left and right side hydraulic shock absorbers. As a result, the hydraulic lines that connect to these pieces of hydraulic equipment extend left and right across the underside of the vehicle.

In the prior art, the foregoing hydraulic shock absorbers and hydraulic apparatus are assembled on a factory line separate from the vehicle assembly line, and prior to vehicle assembly, all the connections were made, the assembly was then filled with operating oil, tested functionally and adjusted for damping. After the assembly and adjustment of these shock absorbers, if they were to be disassembled, the operating oil would leak and they would require readjustment. Accordingly, they were brought to the vehicle assembly line and assembled onto the vehicle in a fully connected state.

If, as was described above, two hydraulic shock absorbers are connected to one hydraulic apparatus in one assembly which is then installed onto the other parts of the suspension on the vehicle, the hydraulic lines that connect the foregoing hydraulic shock absorbers to the foregoing hydraulic apparatus get in the way and hinder the installation of other parts.

Further, because the foregoing assembly is sprawling, extending from one side of the vehicle to the other, it is impossible for just one person to install the assembly.

This problem could be resolved by installing the hydraulic shock absorbers and hydraulic devices on the vehicle individually, and then filling them with operating oil, testing, and adjusting. However, when they are installed on the vehicle, since the hydraulic shock absorbers, the hydraulic devices, and the lines connecting them run along the underside of the vehicle and are in contact with it, not only is it difficult to fill them with operating oil, but the inspection and adjustment operations are difficult to manage because of interference by other suspension components.

From US 2,372,820 there is known a coupling device comprising two coupling members, wherein each of said coupling members is in liquid communication with a hydraulic line, and wherein said two coupling members are releasably attachable to each other in order to establish said liquid communication between the respective hydraulic lines. Each of said coupling members comprises a plug member adapted to close said hydraulic lines. Each plug member of the coupling devices is arranged transversely to its respective hydraulic line. Additionally, the plug members are arranged coaxially and opposite to each other, wherein same plug members are directly facing each other.

From FR 1.032.689 there is additionally known a stop valve for supply of a high pressurized gas out of one gas supply line. The stop valve interconnects the one gas supply line to an openable tap or valve, wherein the stop valve comprises a first connector connectable to the one gas supply line, and wherein the stop valve is releasably attached to a body of the tap. The connection between said stop valve and the body of the tap constitutes an automatic closing/opening device comprising a first plug member for closing said one gas supply line when the stop valve is disconnected from the body of the tap. The first plug member is arranged in line with and coaxially with the one gas supply line. The tap comprises a further connecting means provided at the lower section of the body to a means to which the high pressure gas is supplied. A second plug member is provided in the body of the tap for closing/opening the connection of the body to the further connecting means . Said second plug member is arranged coaxially with and opposite to the further connecting means and opposite to a gas exit line to which the gas is supplied.

Moreover, from US 4,049,251 there is known a hydraulic system comprising a pressure accumulator, wherein the pressure accumulator is connected to a shock absorber by means of a viscous damping device. Said viscous damping device comprises an adjustable orifice. The shock absorber comprises a shock absorbing strut assembly for motorcycles with a telescopically extensible strut having an oil chamber of variable volume therein connected to a gas chamber being located outside of the strut. Within the hydraulic line connecting the strut with the gas chamber, there is arranged the viscous damping device comprising the adjustable orifice and an adjustable screw, wherein the adjustable screw defines a restricted orifice with a central passage in a valve plate arranged in the damping device.

It is an objective of the present invention to provide an improved coupling device as indicated above facilitating an easier and faster handling of hydraulic lines as well as an installation of said hydraulic lines and parts of a hydraulic system in a ready-to-use condition.

This objective is solved in an inventive manner by a coupling device having the features of claim 1.

Further preferred embodiments of the present coupling device are laid down in the respective dependent claims.

It is a further objective of the present invention to provide an improved hydraulic system as indicated above as well as a method for installing said hydraulic systems facilitating an easier and faster handling of hydraulic lines as well as the installation of said hydraulic lines and parts of the hydraulic system in a ready-to-use condition.

The apparatus aspect of this objective is solved in an inventive manner by a hydraulic system having the features of claim 6.

Further preferred embodiments of the present hydraulic system are laid down in the respective dependent claims.

For the method aspect, this objective is solved in an inventive manner by a method having the features of claim 14.

Further preferred embodiments of the present method are laid down in the respective dependent claims.

Accordingly, the present coupling device comprises first and second coupling members being adapted to be fixed to the respective ends of the hydraulic lines to be connected, to releasably close said respective ends, and to be connected with each other for establishing a fluid connection between said hydraulic lines. Said first and second coupling members comprise each a plug member for releasably closing said ends.

In order to establish the closed or off state, respectively, of the ends of said hydraulic lines, it is advantageous when said plug members are screwable within said coupling members and are provided with tapered surfaces adapted to come into contact with respective seat surfaces provided with said coupling members for closing the respective ends of said hydraulic lines.

The hydraulic system as indicated above comprises a coupling device provided between said first hydraulic line and said shock absorber or between said first hydraulic line and a second hydraulic line, said coupling device comprising first and second coupling members being adapted to be fixed to the respective ends of the hydraulic lines to be connected, to releasably close said respective ends, and to be connected with each other for establishing a fluid connection between said hydraulic lines.

In order to further enhance the storability of the hydraulic fluid pressure within the hydraulic lines and to reduce the influence of shocks within said hydraulic system, it is advantageous when said hydraulic system comprises a pressure regulator which is connected to said first hydraulic line or within said second hydraulic line.

According to an advantageous and preferred embodiment, said pressure regulator comprises a free piston slidably received within a cylinder dividing the inside of said cylinder into a high pressure gas chamber and a hydraulic fluid chamber, whereby said hydraulic lines are connected to said hydraulic fluid chamber.

The method as indicated above comprises the steps of a) assembling said hydraulic system on a factory line separate from the vehicle, b) moving all plug members to its opening position and filling the hydraulic system with hydraulic fluid, c) performing functional tests and adjusting the damping rate of said shock absorber, d) moving all plug members into its closed position and separating the respective coupling members from each other, whereby all parts of said hydraulic system are filled with hydraulic fluid and respectively adjusted, and e) installing said parts at a vehicle and connecting the respective coupling members with each other and opening the respective plug members. In that case, it is advantageous when in the above-mentioned method step d) is carried out in that the plug member on the shock absorber side is closed first and then the plug member of the other side to bias said high pressure gas chamber, and that step e) is carried out in that the plug member at the shock absorber side is opened first and then the plug member of the other side.

The hydraulic line coupling apparatus for hydraulic shock absorbers according to another embodiment provides hydraulic systems in which the hydraulic shock absorbers are connected to a separate hydraulic apparatus, allowing the oil lines between the two to be disconnected and connected, wherein the hydraulic line coupling apparatus for hydraulic shock absorbers is characterized by being equipped with a coupling member on the shock absorber side which forms an oil passage that connects by a hydraulic line with the foregoing hydraulic shock absorber, and with a coupling member on the hydraulic apparatus side which forms an oil passage that connects by a hydraulic line with the foregoing hydraulic apparatus, wherein these coupling members have a structure that enable one to be removably attachable to the other, and in addition, wherein these coupling members, when in a coupled state, have respective connecting passages which extend in a direction causing their foregoing oil passages to intersect and connect in the two coupling members, and wherein each of the coupling members is further equipped with plug members that can be externally operated by a screw mechanism to open or close the respective foregoing oil passages, accordingly making it possible for one worker to install the hydraulic shock absorbers and the hydraulic apparatus on a vehicle.

In installing the foregoing hydraulic shock absorbers and hydraulic apparatus on the vehicle, first, all the plug members on the foregoing coupling members are moved to the open position and the entire hydraulic system is filled with operating oil. The system is then function-tested and adjusted for damping while in this state. Then, all the plug members are moved to their closed position and the coupling members are disconnected. This procedure allows the hydraulic shock absorbers and the hydraulic apparatus in the hydraulic system to be separated from each other but to remain filled with operating oil.

Then, when installation onto the vehicle is carried out, the hydraulic shock absorbers are installed as separate assemblies, as is the hydraulic apparatus. To wit, it is possible to install shorter assemblies consisting of the hydraulic shock absorbers and the hydraulic apparatus onto the vehicle, compared to installing them when fully assembled to each other. Further, when other parts are to be installed in the area near the hydraulic lines, they can be installed first, and subsequently, the hydraulic lines can be connected and the plug members opened.

The hydraulic line coupling apparatus for hydraulic shock absorbers according to a further embodiment provides hydraulic systems in which hydraulic shock absorbers are connected to a separate hydraulic apparatus, allowing the oil lines between the two to be disconnected and connected, wherein the foregoing hydraulic shock absorbers employ a structure wherein an internal oil passage is formed from the inside of the cylinder through the center of the piston rod to open on the outside circumferential surface of the projecting end of piston rod, wherein attached to each hydraulic shock absorber is a coupling member having a cylindrical area that fits over the outside surface of the piston rod, one end of said coupling being connected through a hydraulic line to the foregoing hydraulic apparatus and the other end opening into the inside circumferential surface of the cylindrical area to connect with the foregoing oil passage in the piston rod, wherein the foregoing cylindrical area is removably attachable, by a seal disposed between the outside circumferential surface of the piston rod and both ends of the inside circumferential surface of the cylindrical area, and wherein there are plug members that are externally operable by a screw mechanism that moves them in order to open or close the foregoing oil passages in the projecting end of the foregoing piston rod and in the foregoing coupling member, thereby making it possible to connect the hydraulic shock absorbers to the hydraulic apparatus, fill them with operating oil, and perform function testing and make adjustments, and maintain this condition while individually installing the hydraulic equipment on the vehicle.

In installing the foregoing hydraulic shock absorbers and the foregoing hydraulic apparatus to the vehicle, first the foregoing couplers are connected to the piston rods of the hydraulic shock absorbers and all the plug members are moved to the fully open state and the hydraulic system overall is filled with operating fluid. The system is then function-tested and adjusted in this state. Next, all the plug members are moved to the closed position and the coupling members are disconnected from the piston rods. By so doing it is possible to separate the hydraulic shock absorbers from the hydraulic apparatus while leaving these components of the hydraulic system filled with operating oil.

Thereupon the hydraulic shock absorbers and the hydraulic apparatus may be individually installed on the vehicle. To wit, it is possible to install the hydraulic shock absorbers and the hydraulic apparatus in smaller lengths, compared to their length when they are fully assembled. Further, when other parts are to be installed in the area of the hydraulic lines, they may be installed first, and then the hydraulic lines can be connected between the piston rods of the hydraulic shock absorbers and the hydraulic apparatus prior to moving the plug members to the fully opened position.

The hydraulic line coupling apparatus for hydraulic shock absorbers according to a still further embodiment further further provides that the hydraulic line coupling embodiment apparatus hydraulic shock absorbers of the preceding two embodiments do employ coupling members and plug members having a structure wherein the head of each plug member is recessed in the coupling member when the plug is closing the oil passage, and wherein the head of each plug member protrudes to the vicinity of the outside surface of the coupling member when the oil passage is in a fully open state, and wherein the head of each of the foregoing plug members is fitted with a cap having a hook area that contacts the outer surface of the coupling member, where said cap requires a fitting length that is shorter than the total length over which the plug member may be moved from the outside.

In the following, the present invention is explained in greater detail with respect to several embodiments thereof in conjunction with the accompanying drawings, wherein:
**Figure 1** shows the structure of shock absorber apparatus equipped with a hydraulic line coupling apparatus according to a first embodiment;
**Figure 2** is a vertical sectional view of the hydraulic line coupling apparatus;
**Figure 3** is a sectional view along line III-III of Figure 2;
**Figure 4** is a frontal view of a hydraulic shock absorber according to a second embodiment;
**Figure 5** shows an enlargement of the top of the hydraulic shock absorber, with the hole through the piston rod shown by a broken line;
**Figure 6** is a top view of a hydraulic shock absorber;
**Figure 7** is a sectional view of the top of the piston rod along line VII-VII of Figure 6; and
**Figure 8** is a sectional view along line VIII-VIII of Figure 7.

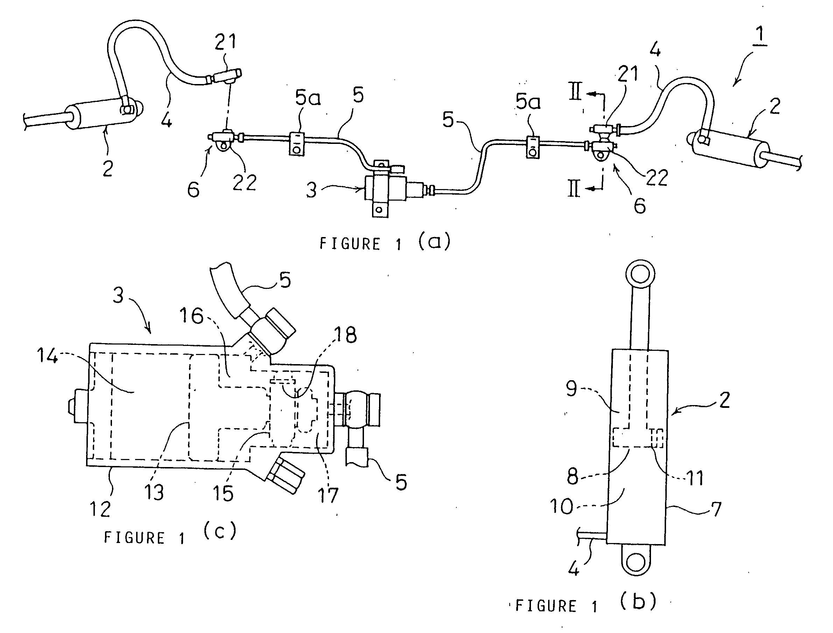

A first embodiment of a hydraulic line coupling apparatus for hydraulic shock absorbers is described below with reference to Figures 1 through 3.

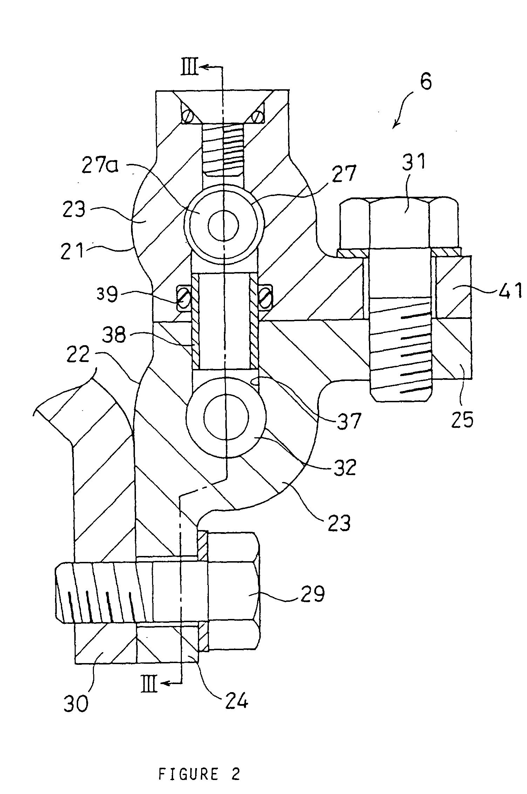

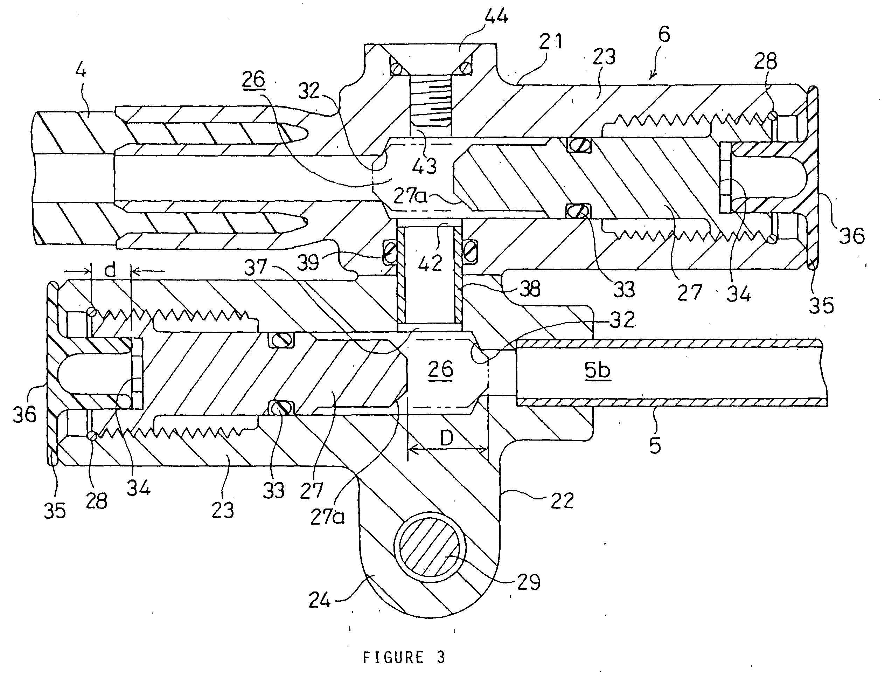

Figure 1 shows the structure of a shock absorber equipped with the hydraulic line coupling apparatus of the present embodiment; in that figure (a) is a front view of the overall hydraulic system; (b) is a structural diagram of a hydraulic shock absorber; and (c) is a structural diagram of the hydraulic apparatus. Figure 2 is a vertical sectional view of the hydraulic line coupling apparatus; it is a sectional view along line II-II of Figure 1(a). Figure 3 is a sectional view along line III-III of Figure 2.

At this point, the implementation of this embodiment on the front wheel suspension of an automobile will be explained.

In Figures 1 through 3, 1 indicates the hydraulic shock absorber apparatus. This shock absorber apparatus 1 is composed of a left-right pair of hydraulic shock absorbers 2, which are installed between the front wheel suspension link (not shown), (said link for example, is installed vertically at the left and right front wheels (not shown)), and the vehicle chassis; a pressure regulator 3 attached to the vehicle, which functions as a hydraulic apparatus; and the hydraulic coupling apparatus 6 that connects to a pressure resistant hose 4 attached to the foregoing hydraulic shock absorbers 2, and to a metal pipe 5 that connects to the foregoing pressure regulator 3.

The compressed helical spring of the hydraulic shock absorbers 3 and the other front wheel suspension parts have been omitted from Figure 1. 5a, shown amid the metal pipes 5 in Figure 1(a) is a fastener that allows the metal pipes 5 to be affixed to a frame cross member (not shown).

The foregoing left-right hydraulic shock absorbers 2 have identical structures, and as is shown in Figure 1(b), and, when filled with operating oil, they are divided by a piston 8 inside a cylinder 7 into a top oil chamber 9 and bottom oil chamber 10. There is also a constricted passage 11 through the piston 8 that connects the two oil chambers 10.

The foregoing pressure regulator device 3, as is shown in Figure 1(c), consists of a free piston 13 inserted into a cylinder 12 which divides the inside of the cylinder 12 into a high pressure gas chamber 14 and an oil chamber; the oil chamber has a structure wherein an auxiliary piston 15 integrally installed on the foregoing free piston 13 partitions said chamber into an oil chamber 16 for the left side hydraulic system and an oil chamber 17 for the right side hydraulic system. There is a constricted passage 18 in the foregoing auxiliary piston 15 that connects the foregoing two oil chambers 16, 17. The structure of the foregoing oil chamber 16 and oil chamber 17 is such that the same increase or the decrease in chamber volume takes place with respect to the movement of the free piston 13 and auxiliary piston 15.

Further, there is a connection from the foregoing oil chamber 16 for the left side hydraulic system, through the metal pipe 5, the hydraulic line coupling apparatus 6, and the pressure-resistant hose 4 to the foregoing bottom chamber 10 of the hydraulic shock absorber 2, while the foregoing oil chamber 17 for the right side hydraulic system is connected, in a manner similar to the foregoing left side hydraulic system, to the bottom oil chamber 10 of the hydraulic shock absorber 2 on the right side of the vehicle. Figure 1(a) is a view from the rear of the vehicle, and the left side of that figure shows the left side of the vehicle.

The foregoing hydraulic line coupling apparatus 6 consists of a coupling member 21 on the shock absorber side that connects to the foregoing pressure-resistant hose 4, and a coupling member 22 on the pressure regulator side that connects to the foregoing metal pipe 5. The vertical stacking of these two members 21, 22 allows the pressure resistant hose 4 to be connected with the metal pipe 5. Further, the structure of the hydraulic coupling apparatus 6 is such that the lower coupling member 22 for the pressure regulator side is attachable or removable in the vertical direction from the upper coupling member 21 for the shock absorber side.

Thus, in a hydraulic shock absorber apparatus 1 having the above described structure, when both the foregoing members 21, 22 of the hydraulic coupling apparatus 6 are connected and when the entire hydraulic system has been filled with operating oil, when the left and right hydraulic shock absorbers 2, 2 are operated in the same direction, damping will be generated only by the constricted connecting passage 11 between the hydraulic shock absorbers 2. When the left and right hydraulic shock absorbers 2 are operated in different directions from each other, the damping generated by the constricted passage 18 of the auxiliary piston 15 adds to the foregoing damping. Thus, the damping is relatively small when the vehicle is pitching or bouncing, but greater when the vehicle is rolling.

Next, the structure of the above-described hydraulic coupling apparatus 6 will be explained in further detail with reference to Figures 2 and 3.

The coupling member 22 on the pressure regulator side of the hydraulic coupling apparatus 6 is an integral assembly composed of a bottom plate member 24 which projects downward from one end of an approximately cylindrical portion 23, a horizontally projecting top plate 25, and a coaxial connection between the cylinder portion 23 and the foregoing metal pipe 5. In addition the hollow area of the foregoing cylindrical portion 23 forms an oil passage 26 that connects to the oil passage 5b inside the metal pipe 5. A plug member 27 that will be described below is threaded into the other end of this hollow area. There is a clip 28 that prevents the plug member 27 from being removed from the other end of the foregoing cylinder area 23.

The foregoing lower plate shaped member 24 attaches to a bracket 30 on the cross frame by an attachment bolt 29, and the foregoing top plate shaped member 25 attaches to the plate shaped area of the below described coupling member 21 on the shock absorber side by attachment bolt 31.

The foregoing plug member 27 may be screwed into the foregoing cylindrical portion 23, and a tapered surface 27a is formed on its forward end. Threading the plug member 27 into the cylindrical portion 23 causes the tapered surface 27a to come into contact with a seat surface 32 that is formed on the connection area of the metal pipe 5 to tightly close it off, as shown by the broken line in Figure 3. Further, an O-ring 33 which is fitted mid-way lengthwise over the plug member 27, comes into rubbing contact with the inside circumferential surface of the foregoing hollow area. There is a hexagonal hole 34 formed in the end of the plug member that is opposite the end with the tapered surface 27a and accommodating an Allen wrench. Further, there is a cap 36 having a hook area 35 that extends toward the end surface side of the cylinder area 23 in the foregoing hexagonal hole 34. The fitting distance *d* for this cap 36, as shown in Figure 3, is designed to be shorter than the total movement D of the plug member 27.

Thus, the plug member 27 having the above described structure can be turned and threaded inward using an Allen wrench (not shown) fitted into the hexagonal hole 34 that is exposed when the foregoing cap 36 is removed, By so doing the tapered surface 27a at its end tightly seals against the foregoing seat surface 32, thereby causing the plug member 27 to close the oil passage 26 inside the cylindrical portion 23 at the point where the inside of the metal pipe 5 connects with the oil passage 5b.

As is shown for this implementation embodiment, inside the cylinder area 23, the oil passage 26 and the connection area to the metal pipe 5 are coaxial, and the machining of the foregoing seat surface 32 makes it possible to easily match the axes of the seat surface 32 and the plug member 27. Thus, when fully closed as described above, the plug member 27 provides an excellent seal.

When the above described plug member 27 is in the closed position, even if the foregoing cap 36 is pushed into the hollow area of the cylindrical portion 23 from the outside, it will not reach the plug member 27, and therefore cannot be attached to the cylindrical portion 23.

There is a round hole 37 bored in the top of the coupling member 22 on the pressure regulator side that connects with the oil passage 26; a connecting pipe 38 is press-fitted into this round hole 37 from the top. The axis of the foregoing round hole 37 is formed to be perpendicular to the axis of the foregoing cylindrical portion 23. Further, approximately half the connecting pipe 38, in the lengthwise direction, projects above the cylindrical portion 23, and the coupling member 21 for the shock absorber side is fitted onto this projecting end. There is also an O-ring 39 in this fitting area. The space inside the connecting pipe 38 forms a connecting passage according to this embodiment.

To wit, with regard to this coupling member 22 on the pressure regulator side, the operating oil passes through the foregoing oil passage 26 and flows from the metal pipe 5 side into the connecting passage inside the connecting pipe 38, or it flows from the connecting passage to the metal pipe 5 side. In the present embodiment, when the plug member 27 is positioned in its fully open position in order that the flow of the operating oil not be impeded by the plug member 27, the structure is such that the tapered surface 27a of that plug member 27 does not significantly protrude into the foregoing flow passage area.

The coupling member 21 on the shock absorber side has roughly the same structure as the coupling member 22 on the foregoing pressure regulator side; the coupling member 22 on the pressure regulator side is stacked from above and affixed by the foregoing connecting bolt 31. At this point, in order to avoid repetitious discussion, the component parts and positions of the coupling member 21 that are the same as those for the coupling member 22 on the pressure regulator side bear the same reference numbers, and detailed discussion of them will be omitted.

At the cylindrical portion 23 of the coupling member 21 on the shock absorber side, there is a plate-shaped member 41 that is integrally affixed to the foregoing top plate shaped member 25 of the coupling member 22 on the pressure regulator side. In addition, a pressure resistant hose 4 is attached opposite the plug member 27. Just like the foregoing coupling member 22 on the pressure regulator side, this coupling member 21 is coaxial with the connection area of the pressure resistant hose 4 and the plug member 27. When the foregoing plate shaped area 41 has been affixed by a connecting bolt 31 to the foregoing top plate shaped member 25, the cylindrical portion 23 runs parallel to the cylindrical portion 23 of the coupling member 22 on the pressure regulator side. In addition, when viewed from the top, both cylindrical areas 23 have approximately matching axes. In the present embodiment, the outlet direction of the pressure resistant hose 4 that extends from the coupling member 21 on the shock absorber side is 180° from the outlet direction of the metal pipe 5 of the bottom coupling member 22 on the pressure regulator side. Accordingly, when the pressure resistant hose 4 and metal pipe 5 are viewed from the top, they are in approximate alignment.

A round hole 42, for the insertion of the foregoing connecting pipe 38, is bored perpendicularly with respect to the axis of the cylindrical area at the bottom of the cylindrical portion 23 of the coupling member 21 on the shock absorber side. The foregoing O-ring 39 has been inserted into the inside wall surface of this round hole 42.

By fitting the connecting pipe 38 into this round hole 42, the oil passages 26 of the upper and lower coupling members are connected together through the inside of the connecting pipe 38.

Further, bored at the top of the cylindrical portion 23 of the coupling member 21 on the shock absorber side is an air bleed hole 43 which lies opposite the foregoing connecting pipe and which passes into the oil passage 26. A venting screw 44 is threaded into the opening of this air bleed hole 43 with an O-ring inserted between them.

When the shock absorber apparatus 1 that is equipped with the hydraulic line coupling apparatus 6 of the above-described structure is installed on a vehicle, then, first, the hydraulic shock absorbers 2, the pressure regulator 3, and the hydraulic line coupling apparatus 6 are assembled together on a factory line separate from the vehicle assembly line . At this time, the hydraulic shock absorbers 2 are connected by a pressure resistant hose 4 to the coupling member 21 on the shock absorber side of the hydraulic line coupling apparatus 6, while the pressure regulator 3 is connected by metal pipes 5, 5 on the left and right to the coupling members on the pressure regulator side of the hydraulic line coupling apparatus 6.

Next, the coupling member 22 on the pressure regulator side is attached to the coupling member 21 on the shock absorber side. At this time, the connecting pipe 38 is inserted into the round hole 42 and, in that condition, the attachment bolt 31 is used to fasten the two coupling members 21, 22 together. Then, all the plug members 27 are moved to their fully open position and the hydraulic system is filled with operating oil. After filling, conventional methods are used to perform functional tests and to adjust the damping of the hydraulic shock absorbers.

After completing the foregoing function tests on damping adjustment, all the plug members 27 are threaded into the coupling members 21, 22 into their closed position. At this time, the coupling member 21 on the shock absorber side is closed off by the end of the plug members 27, then the plug member 27 of the coupling members 22 on the pressure regulator side is closed. By closing the plugs 27 in this sequence, the operating oil that is displaced due to the projection of the plug members 27 can be forced to flow toward the pressure regulator 3 side.

After that the coupling member 21 on the shock absorber side is separated from the coupling member 22 on the pressure regulator side. So doing separates the hydraulic shock absorber 2 side from the pressure regulator 3 side in the hydraulic system, while each remains filled with operating oil. At this point an assembly consisting of a hydraulic shock absorber 2, pressure resistant hose 4, and coupling member 21 on the shock absorber side, and an assembly consisting of a pressure regulator 3, metal pipe 5, and coupling member 22 on the pressure regulator side can be assembled separately onto the vehicle. To wit, the hydraulic shock absorbers 2 and the pressure regulator 3 can be attached to the vehicle in a much shorter form than would be possible if the two remained assembled together. At this time the hydraulic shock absorbers 2, the pressure regulator 3, the metal pipe 5, and the coupling member 22 on the pressure regulator side are attached to the vehicle.

Then, when there are other parts to be attached in close proximity to the pressure resistant hose 4, the coupling members 21, 22 can be reconnected after such parts are installed, and then all the plugs 27 can be turned into the open position. By so doing, since the operating oil is pushed by the pressure in the high pressure gas chamber 14 of the pressure regulator 3, the operating oil flows into the oil passage 26 and fills it after the plug 27 has been removed.

When opening the plug members 27, the plug members 27 that are most distant from the air bleed hole 43, to wit, the lower plug members 27 of the coupling member 22 on the shock absorber side, are opened first. This procedure causes the operating oil to fill the oil passage 26 of the coupling member 22 on the shock absorber side, forcing the air upward and compressing it. At this time, the venting screw 44 may be loosened slightly to releases the seal by the O-ring in the seal area. The venting screw 44 is then tightened, the air ceases to be expelled and the operating oil begins flowing out. After that the plug members of the coupling members 21 on the shock absorber side are opened to their fully open position.

As a result, the hydraulic shock absorbers 2 are connected with the pressure regulator 3 and filled with operating oil while maintaining their functions and adjustments. This procedure permits the hydraulic shock absorbers 2 to be attached individually to the vehicle.

In the present embodiment, there is a 180° difference in the direction that the pressure resistant hose 4 and the metal pipe 5 run out of the hydraulic coupling apparatus 6, but the teaching of the present embodiment is not limited to this design, the direction of the conduits may be changed as desired. To wit, it would be possible for the pressure resistant hose 4 and the metal pipe 5 to run out of the hydraulic coupling apparatus 6 in the same direction, or, the pressure resistant hose 4 and the metal pipe 5 could both run out of the hydraulic coupling apparatus at right angle to their axes.

Further, with regard to the passage structure of the oil passage 26 of the coupling member 21 on the shock absorber side and the passage structure of the oil passage 26 of the coupling member 22 on the pressure regulator side, in addition to using the connecting pipe 38 and O-ring 39 as described in the preceding embodiment, it is also be possible to form a pipe shaped segment integrally on either of the coupling members 21, 22 and to fit one member into the other using a seal material between. It is further possible to integrally form flange members on the two coupling members and then attach them together at the flange with a seal material between them.

In addition, in the present embodiment, the plug members 27 are designed in a manner such that they may be completely retracted from the flow areas of the oil passage 26 when in their fully open position in order to eliminate any narrowing of the flow passages, but it is also be possible to design the oil passages 26 to have a greater-than-needed diameter to increase the passage cross section and minimize any resistance caused by the passage. To wit, it is possible to obtain a compact hydraulic coupling apparatus 6 even if the cross section of the passages were increased.

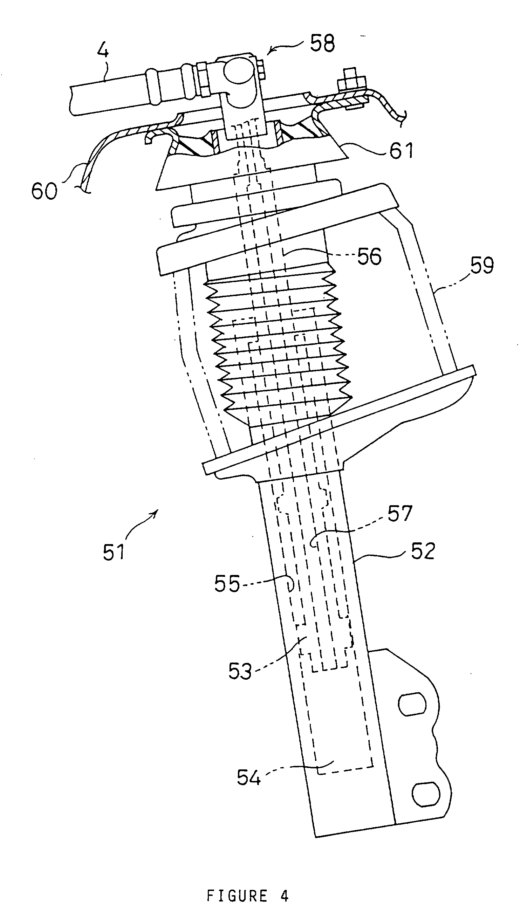

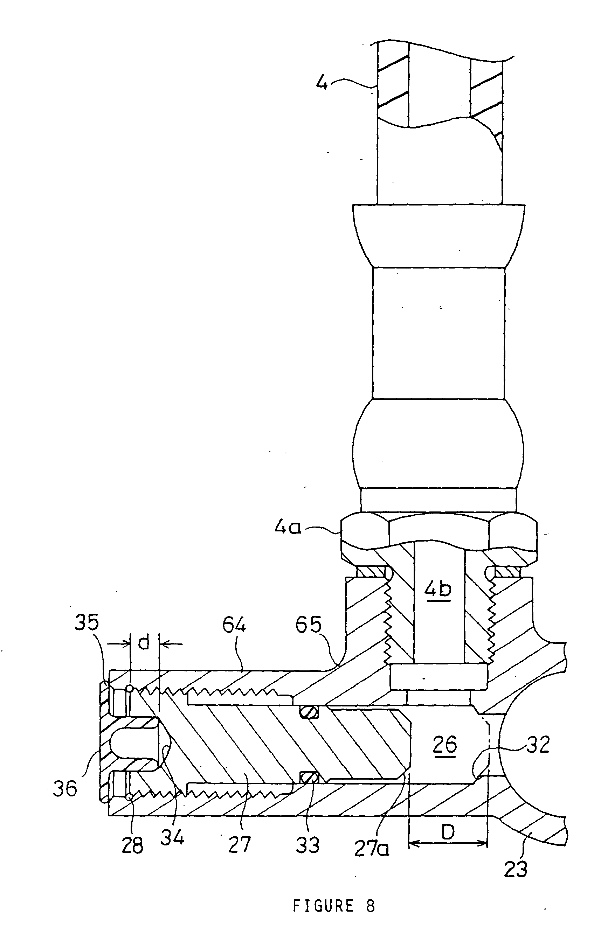

A second embodiment of a hydraulic coupling apparatus for hydraulic shock absorbers is explained in detail with reference to Figures 4 through 8.

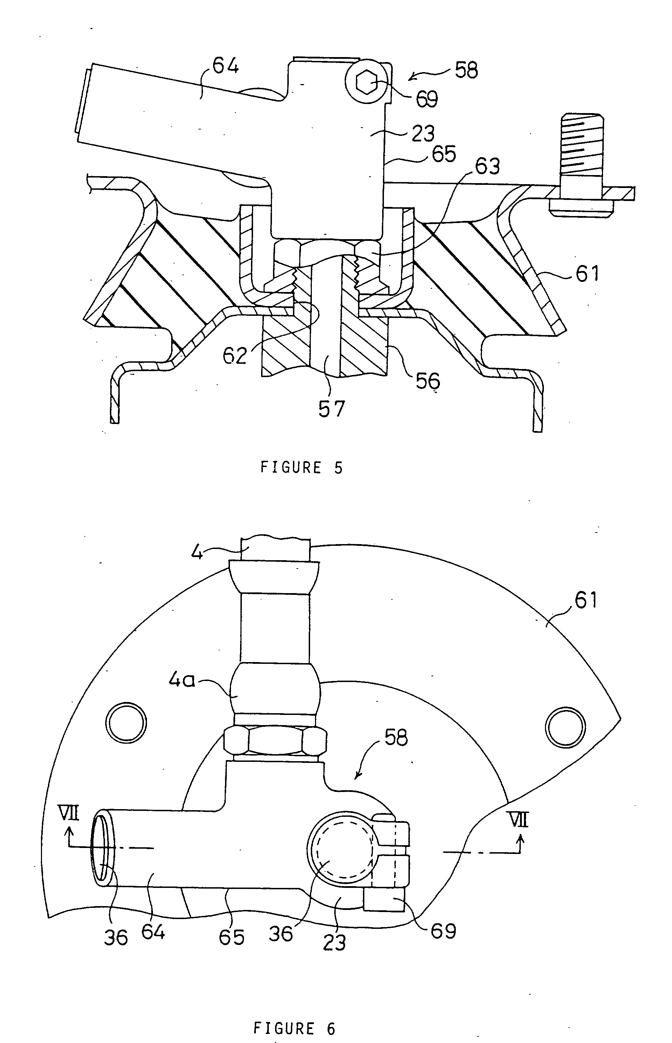

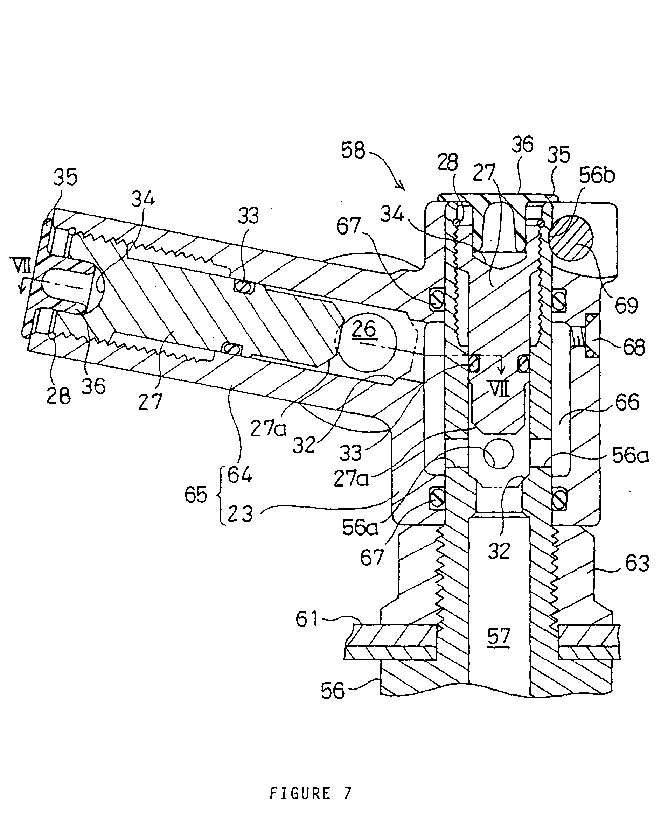

Figure 4 is a front view of the second embodiment of a hydraulic shock absorber; Figure 5 is an enlargement of the top of the hydraulic shock absorber, and in this figure, the passage through the piston rod is shown by a broken line. Figure 6 is a top view of the hydraulic shock absorber. Figure 7 is a sectional view of the top end of the piston rod that was taken along line VII-VII of Figure 6. In these figures, parts that are the same as, or equivalent to those described with reference to the foregoing Figures 1 - 3 bear the same reference numbers and further explanation of them will be omitted.

In Figures 4 through 8, reference number 51 indicates a hydraulic shock absorber for automobiles. With regard to this hydraulic shock absorber, a piston 53 inside a cylinder 52 partitions it into a lower oil chamber 54 and an upper oil chamber 55. An oil passage 57 passes through the inside of the piston rod 56, and the foregoing lower oil chamber 54 is attached to a pressure regulator (not shown) by a below-described hydraulic coupling apparatus 58 and a pressure resistant hose 4. The pressure regulator 3 employed in the present embodiment has the same structure as the one employed in the foregoing first implementation embodiment.

Attached at the top of the foregoing hydraulic shock absorber 51 are a compressed helical spring 59 and an attachment member 61 to affix the top end of the hydraulic shock absorber 51 to the cushioning support member 60 on the vehicle. As is shown in Figure 5, the foregoing piston rod 56 protrudes upward from the foregoing cylinder 52 and this protruding end passes through the piston rod hole 62, and then a nut 63 threads onto the end of the piston rod 56 to affix its top end.

The foregoing oil passage 57 is formed by a round hole through the axis area of the piston rod 56; a plug member 27 that is threaded into the projecting end of the piston rod 56 closes the opening on the projecting end. Further, with regard to this oil passage 57, just slightly toward the plug member 27 side from the seal surface 32 against which the foregoing plug member's 27 tapered surface 27a is seated, there are radial holes 56a bored in four directions. To wit, the oil passage 57 opens to the outside circumferential surface of the piston rod 56 through the cross holes 56a.

The foregoing hydraulic coupling apparatus 58 is composed of a cylindrical portion 23 that fits around the outside circumference of the (top) of the projecting end of the foregoing piston 56, a coupling member that is integrally formed upon a second cylindrical area 64 that projects to the side of the cylindrical portion 23, a plug member 27 that threads into the foregoing piston rod 56 and a plug member 27 that threads into the foregoing second cylindrical area 64. The foregoing cylindrical portion 23 of the foregoing coupling member 65 has a larger-diameter zone over a part of its inside circumference forming a concave area 66 when the cylinder is viewed in cross section. On the inside circumferences just above and below this concave 66 in the axial direction are O-rings 67.

At a position at the uppermost point of the foregoing concave area 66 in the cylindrical portion 23 is an air bleed hole into which is threaded a venting screw 68. There is an O-ring positioned disposed between the venting screw 68 and the opening of the air bleed hole that fits over the thread area of the venting screw 68. Further, there is an attachment bolt 69 that threads-in at the topmost part of the cylindrical zone 23 to secure the piston rod 56 to the coupling member 65. The outside circumferential area of this attachment bolt 69 fits into a concave area 56 be that is formed in the piston rod 56.

In the foregoing second cylindrical area 64, an oil passage 26 formed in a hollow area connects to the top of the concave area 66 in the foregoing cylindrical area 63. In the present embodiment, the foregoing oil passage 26, and the concave area 66 of the cylindrical portion 23 comprise oil passage of the coupling member according to the second embodiment.

The plug member 27 threading into this second cylindrical area 64 is designed to be able to tightly fit against the seal surface 32 formed in the passage of the foregoing concave area 66. Furthermore, as shown in Figure 6 with regard to the second cylindrical area 64, the threaded member 4a of the pressure resistant hose 4 threads-on at right angles to the axis of this second cylindrical area 64 to thereby connect the oil passage 4b inside the pressure resistant hose 4 with the foregoing oil passage 26.

Then the foregoing cylindrical portion 23 is fitted together with the coupling member 65 that is integrally formed on the second cylindrical area 64 in a manner such that the cylindrical portion 23 fits around the outside circumferential surface of the piston rod 56 with the concave area 66 positioned opposite the foregoing side holes 56a. The assembly is then fastened together by the attachment bolt 69 at the top of the cylindrical portion 23, thereby affixing the projecting end of the piston rod 56. To wit, by removing the attachment bolt 69, it is possibly to freely remove the coupling member 65 from the piston rod 56.

Next, the procedure will be explained for assembling onto the vehicle the hydraulic line coupling apparatus with the above described structure, the hydraulic shock absorbers, and the pressure regulator.

The cylinders 52 of the hydraulic shock absorbers 51, the hydraulic line coupling device 58 and the pressure regulator are individually assembled, and then, the hydraulic line coupling apparatus 58 are attached to the piston rods 56 of the foregoing cylinders 52. In addition, a pressure-resistant hose 4 is used to connect the hydraulic line coupling apparatus 58 to the pressure regulator 3. At this time the plugs 27 are all moved to their fully opened position and then the cylinders 52 undergo function testing and damping adjustments after the hydraulic system has been filled with operating oil.

Then the plug member 27 inside the piston rod 56 is placed in the fully closed position and the plug member 27 inside the second cylindrical area 64 is closed as well. The reason for this sequence is to cause the operating oil displaced by the plug member 27 to flow to the pressure regulator side. By fully closing the plug members 27 it is then possible to separate the hydraulic shock absorbers 51 from the pressure regulator in the hydraulic system. By removing the attachment bolt 69 of the hydraulic line coupling apparatus 58, the coupling member 65 can be removed from a piston rod 56.

Next, while the cylinders 52 remain filled with operating oil as described above, they, along with the pressure regulator 3, can be attached to the vehicle. When attaching the cylinders 52, with the compressed helical spring 59 in place, the piston rod 56 is inserted through the piston rod hole 62 in the attachment member 61. To wit, the piston rod 56 is left unattached to the coupling member 65, and because the inside diameter of the piston rod hole 62 is slightly larger than the outside diameter of the piston rod 56, the piston rod 56 can be inserted through it. After affixing the piston rod 56 to the affixing member 61, as shown in Figure 4, the affixing member 61 can then be attached to the cushioning support plate 60 on the vehicle. This operation completes the attachment of the hydraulic shock absorbers 51 to the vehicle.

After that the coupling member 65 of the hydraulic line coupling apparatus 58 is affixed to the top end of the piston rod 56 of the foregoing hydraulic shock absorber 51. Then all the plug members 27 are opened. At this time, the plug member 27 on the piston rod 56 side is opened first; thereby the operating oil in the oil passage 57 that is inside the piston rod 56 will flow into the concave area 66 inside the coupling member 65 and into the oil passage 26. This flow results from the high pressure gas in the regulator 3 that was generated when the plug members 27 were closed after function testing and making damping adjustments to the cylinders 52 of the hydraulic shock absorbers 51. That closing caused the operating oil inside the cylinders to be kept under high pressure. In other words, by opening the plug members 27, this high pressure acts on the operating oil to make it flow from the oil passage 57 to the inside of the coupling member 65.

Thus, when the operating oil flows to the inside of the coupling member 65 as described, the air therein is pushed upward and compressed. Then, by loosening and subsequently tightening the venting screw 68 in the coupling member 65, the sealing by the O-ring can be stopped and then reestablished in order to release the foregoing compressed air to the outside. The venting screw 68 is tightened when the air ceases to bleed out and operating oil begins to appear. After that, the plug member 27 in the second cylindrical area 64 is moved to its fully open position.

Thus, after the coupling member 65 has been filled with operating oil, caps 36 are fitted over the plug member 27 assigned to the inside of the piston rod 56 and plug member 27 assigned to the inside of the second cylindrical area 64. This procedure completes the assembly operation. Since these caps 36 have a fitting distance *d* inside the hexagonal hole 34 in the plug member that is shorter than the total displacement D of the plug member 27, they cannot be attached unless the plug members 27 are near their fully open or fully closed positions.

Accordingly, the present embodiment also makes it possible to connect the hydraulic shock absorbers 51 to the pressure regulator 3, fill them with operating oil, and perform function testing and make damping adjustments, and then individually assemble these components onto the vehicle without losing those adjustments.

The hydraulic line coupling apparatus of the present embodiment is not confined to the above described implementation, it can be used with any hydraulic system to make the connections for any type of hydraulic apparatus that is connected to the hydraulic shock absorbers on automobiles. Further, the vehicles to which this embodiment may be applied is not limited to automobiles, it may be used on all vehicles that use hydraulic shock absorbers in the wheel suspension apparatus.

As was described above, the hydraulic line coupling apparatus for hydraulic shock absorbers according to the embodiments is provided for hydraulic systems in which a hydraulic shock absorber is connected to a separate hydraulic apparatus, and allows mutual connection and disconnection of the oil lines between the two to be disconnected and connected, the hydraulic line coupling apparatus for hydraulic shock absorbers is equipped with a coupling member on the shock absorber side which forms an oil passage that connects a hydraulic line with the foregoing hydraulic shock absorber, and with a coupling member on the hydraulic apparatus side which forms an oil passage that connects a hydraulic line with the foregoing hydraulic apparatus, wherein these coupling members have a structure that enables them mutually to be removably attachable to the other, and in addition, and wherein each of the coupling members is further equipped with plug members that can be externally operated by a screw mechanism to open or close the respective foregoing oil passages. This configuration allows the hydraulic shock absorbers to be connected to the hydraulic apparatus and to be function-tested and adjusted for damping, and then to maintain this condition while each piece of the hydraulic equipment is installed on the vehicle.

Accordingly, filling with operating oil, function-testing, and adjustments for damping may be performed without interference from the vehicle, and after connecting the hydraulic shock absorbers to the hydraulic apparatus and performing the function testing and adjustments for damping, these components can be installed on the vehicle, thereby preventing any interference by the hydraulic lines in installing other parts on the vehicle, and making it possible for a single worker to install the hydraulic shock absorbers and hydraulic apparatus on the vehicle.

The present embodiments provide a hydraulic line coupling apparatus for hydraulic shock absorbers in hydraulic systems in which a hydraulic shock absorber is connected to a separate hydraulic apparatus, allowing the oil lines between the two to be disconnected and connected, wherein the foregoing hydraulic shock absorbers, which employ a structure wherein an internal oil passage is formed from the inside of the cylinder through the center of the piston rod, to open on the outside circumferential surface of the projecting end of piston rod, wherein attached to each hydraulic shock absorber is a coupling member having a cylindrical area that fits over the outside surface of the piston rod, one end of said coupling being connected through a hydraulic line to the foregoing hydraulic apparatus and the other end opening into the inside circumferential surface of the cylindrical area to connect with the foregoing oil passage in the piston rod, wherein the foregoing cylindrical area is removably attachable, through a seal disposed between the outside circumferential surface of the piston rod and both ends of the inside circumferential surface of the cylindrical area, and wherein there are plug members, that are externally operable by a screw mechanism that moves them in order to open or close the foregoing oil passages in the projecting end of the foregoing piston rod and in the foregoing coupling member. This structure enables the hydraulic shock absorbers to be connected to the hydraulic apparatus and be function-tested and adjusted for damping, and then to maintain this condition while each component of the hydraulic equipment is installed on the vehicle.

Accordingly, filling with operating oil, function-testing, and adjustments for damping may be performed without interference from the vehicle, and after connecting the hydraulic shock absorbers to the hydraulic apparatus and performing function-testing and adjustments for damping, these components can be installed on the vehicle, thereby preventing any interference by the hydraulic lines in installing other parts on the vehicle and making it possible for a single worker to install the hydraulic shock absorbers and hydraulic apparatus on the vehicle.

Furthermore, because the present embodiments make the coupling members removably attachable to the piston rod of the hydraulic shock absorbers, by removing the coupling member from a piston rod, only the plug member remains attached to the piston rod. As a result, when installing the hydraulic shock absorbers on the vehicle, the piston rod can be inserted through the piston rod hole in the attachment member without any interference, thereby simplifying the assembly of the hydraulic shock absorbers onto the vehicle.

The present embodiments provide hydraulic line coupling apparatus for hydraulic shock absorbers that employ coupling members and the plug members having a structure wherein the head of each plug member is recessed in the coupling member when the plug is closing the oil passage, and wherein the head of each plug member protrudes to the vicinity of the outside surface of the coupling member when the oil passage is in a fully open state, and wherein the head of each of the foregoing plug members is fitted with cap having a hook area that contacts the outer surface of the coupling member, entailing a fitting length that is shorter than the total length over which the plug member may be moved from the outside.

As a result, an observation can be made to check for the presence of a cap as a means to assure the plug member is in the open position. By making this determination, it is possible to proceed to the next process without moving the plug member to an open position.

## Claims

1. Coupling device (58) for releasably connecting hydraulic lines (4,57) comprising first and second coupling members (56,65) being adapted to be fixed to the respective ends of the hydraulic lines (4,57) and to be connected with each other for establishing a fluid connection between said hydraulic lines (4,57), said first and second coupling members (56,65) comprising plug members (27) adapted to releasably close said respective ends of the hydraulic lines (4,57), wherein one of the plug members (27) is transversely arranged with respect to its associated hydraulic line (4),
**characterized in that**
the respective other plug member (27) is coaxially aligned with and arranged opposite to its associated hydraulic line (57).

2. Coupling device according to claim 1, **characterized in that** said first and second coupling members (65,56) are releasably connected with each other such that the second coupling member (56) which is associated with one of said plug members (27) is received within a first cylindrical portion (23) being integrally provided with a second cylindrical portion (64) which is receiving said other plug member (27), wherein a fluid connection is established via openings (56a) provided in said second coupling member (56) opening into a cavity (66) within said first cylindrical portion (23) and opening into one hydraulic line (57), wherein said cavity (66) is in fluid connection with the other hydraulic line (4).

3. Coupling device according to claim 1 or 2, **characterized in that** said plug members (27) are screwable within said coupling members (65,56) and are provided with tapered surfaces (27a) adapted to come into contact with respective seat surfaces (32) provided with said coupling members (65,56) for closing the respective ends of said hydraulic lines (4,57).

4. Coupling device according to at least one of the preceding claims 1 to 3, **characterized in that** the outside facing ends of said plug members (27) are closable by caps (36), wherein said plug members (27) are only closable by said caps (36) when said plug members (27) are in its open position.

5. Coupling device according to at least one of the preceding claims 1 to 4, **characterized in that** said first and second coupling members (65,56) are connected with each other by an attachment bolt (69).

6. Hydraulic system for a vehicle, comprising at least one shock absorber (2,51) connected to a first hydraulic line (4) and a coupling device provided between said first hydraulic line (4) and said shock absorber (2,51), said shock absorber comprising a second hydraulic line (57),
**characterized in that**
said coupling device (58) comprises first and second coupling members (56,65) being adapted to be fixed to the respective ends of the hydraulic lines (4,57) to be connected and to be connected with each other for establishing a fluid connection between said hydraulic lines (4,57), said first and second coupling members (56,65) comprising plug members (27) adapted to releasably close said respective ends of the hydraulic lines (4,57), wherein one of said plug members (27) is coaxially aligned with and arranged opposite to its associated hydraulic line (57), whereas the other plug member (27) is transversely arranged to its associated hydraulic line (4).

7. Hydraulic system for a vehicle according to claim 6, **characterized in that** said first and second coupling members (65,56) are releasably connected with each other such that the second coupling member (56) which is associated with one of said plug members (27) is received within a first cylindrical portion (23) being integrally provided with a second cylindrical portion (64) which is receiving said other plug member (27), wherein a fluid connection is established via openings (56a) provided in said second coupling member (56) opening into a cavity (66) within said first cylindrical portion (23) and opening into one hydraulic line (57), wherein said cavity (66) is in fluid connection with the other hydraulic line (4).

8. Hydraulic system for a vehicle according to claim 6 or 7, **characterized in that** said plug members (27) are screwable within said coupling members (65,56) and are provided with tapered surfaces (27a) adapted to come into contact with respective seat surfaces (32) provided with said coupling members (65,56) for closing the respective ends of said hydraulic lines (4,57).

9. Hydraulic system for a vehicle according to at least one of the preceding claims 6 to 8, **characterized in that** the outside facing ends of said plug members (27) are closable by caps (36), wherein said plug members (27) are only closable by said caps (36) when said plug members (27) are in its open position.

10. Hydraulic system for a vehicle according to at least one of the preceding claims 6 to 9, **characterized in that** said first and second coupling members (65,56) are connectable with each other by an attachment bolt (69).

11. Hydraulic system for a vehicle according to at least one of the preceding claims 6 to 10, **characterized by a** pressure regulator (3) connected to said first hydraulic line (4) or within a second hydraulic line (5).

12. Hydraulic system for a vehicle according to claim 11, **characterized in that** said pressure regulator (3) comprising a free piston (13) slidably received within a cylinder (12) dividing the inside of said cylinder (12) into a high pressure gas chamber (14) and a hydraulic fluid chamber (16), whereby said hydraulic lines (4; 5) are connected to said hydraulic fluid chamber (16).

13. Hydraulic system for a vehicle according to claim 12, **characterized in that** said free piston (13) is provided with an integrally formed auxiliary piston (15) at the hydraulic fluid chamber side dividing said hydraulic fluid chamber into a first chamber (16) connected to one hydraulic line (4;5) and a second chamber (17) connected to the other hydraulic line (4;5).

14. Method for installing a hydraulic system at a vehicle, according to at least one of the preceding claims 6 to 13, comprising the steps of:
a) assembling said hydraulic system on a factory line separate from the vehicle,
b) moving all plug members (27) to its opening position and filling the hydraulic system with hydraulic fluid,
c) performing functional tests and adjusting the damping rate of said shock absorber (51),
d) moving all plug members (27) into its closed position and separating the respective coupling members (65,56) from each other, whereby
all parts of said hydraulic system are filled with hydraulic fluid and respectively adjusted, and
e) installing said parts at a vehicle and connecting the respective coupling members (65,56) with each other and opening the respective plug members (27).

15. Method according to claim 14, wherein a pressure regulator (3) is connected to said first hydraulic line (4) or within said second hydraulic line (5), said pressure regulator (3) comprising a free piston (13) slidably received within a cylinder (12) dividing the inside of said cylinder (12) into a high pressure gas chamber (14) and a hydraulic fluid chamber (16), wherein said hydraulic lines (4;5) are connected to said hydraulic fluid chamber (16), **characterized in that** step d) is carried out **in that** the plug member (27) on the shock absorber side is closed first and then the plug member (27) of the other side to bias said high pressure gas chamber (14), and that step e) is carried out **in that** the plug member (27) at the shock absorber side is opened first and then the plug member (27) of the other side.

16. Method according to claim 15, **characterized in that** in step e) after opening the plug member (27) at the shock absorber side the respective coupling member is vented.

## Patentansprüche

1. Kupplungsvorrichtung (58) zum lösbaren Verbinden von Hydraulikleitungen (4, 57), mit ersten und zweiten Kupplungsteilen (56, 65), die vorgesehen sind, um mit den jeweiligen Enden der Hydraulikleitungen (4, 57) befestigt zu werden und miteinander verbunden zu werden, um eine Fluid- Verbindung zwischen den Hydraulikleitungen (4, 57) herzustellen, wobei die ersten und zweiten Kupplungsteile (56, 65) die Verschlußteile (27), vorgesehen zum lösbaren Verschließen der jeweiligen Enden der Hydraulikleitungen (4, 57), aufweisen, wobei eines der Verschlußteile (27) in Bezug auf seine zugehörige Hydraulikleitung (4) quer angeordnet ist,
**dadurch gekennzeichnet, dass**
das jeweilig andere Verschlußteil (27) koaxial ausgerichtet mit und gegenüberliegend zu seiner zugehörige Hydraulikleitung (57) angeordnet ist.

2. Kupplungsvorrichtung nach Anspruch 1, **dadurch gekennzeichnet, dass** die ersten und zweiten Kupplungsteile (65, 56) derart miteinander lösbar verbunden sind, dass das zweite Kupplungsteil (56), das mit einem der Verschlußteile (27) zugeordnet ist, innerhalb eines ersten zylindrischen Abschnittes (23) aufgenommen ist, der einstückig mit einem zweiten zylindrischen Abschnitt (64) ist, der das anders Verschlußteil (27) enthält, wobei eine Fluidverbindung hergestellt ist über Öffnungen (56a), vorgesehen in dem zweiten Kupplungsteil (56), das sich in einen Hohlraum (66) innerhalb des ersten zylindrischen Abschnittes (23) öffnet und in eine Hydraulikleitung (57) öffnet, wobei der Hohlraum (66) mit der anderen Hydraulikleitung (4) in Fluidverbindung ist.

3. Kupplungsvorrichtung nach Anspruch 1 oder 2, **dadurch gekennzeichnet, dass** die Verschlußteile (27) in die Kupplungsteile (65, 56) einschraubbar sind und mit geneigten Oberflächen (27a) versehen sind, vorgesehen um mit den jeweiligen Sitzoberflächen (32) in Kontakt zu kommen, die mit den Kupplungsteilen (65, 56) versehen sind, zum Verschließen der jeweiligen Enden der Hydraulikleitungen (4, 57).

4. Kupplungsvorrichtung nach zumindest einem der vorhergehenden Ansprüche 1 bis 3, **dadurch gekennzeichnet, dass** nach außen weisenden Enden der Verschlußteile (27) durch Kappen (36)verschließbar sind; wobei die Verschlußteile (27) durch die Kappen (36) nur verschließbar sind, wenn die Verschlußteile (27) in ihren offenen Positionen sind.

5. Kupplungsvorrichtung nach zumindest einem der vorhergehenden Ansprüche 1 bis 4 **dadurch gekennzeichnet, dass** die ersten und zweiten Kupplungsteile (56, 65) miteinander durch eine Befestigungsschraube (69) verbunden sind.

6. Hydrauliksystem für ein Fahrzeug, mit zumindest einem Stoßdämpfer (2, 51), verbunden mit einer ersten Hydraulikleitung (4) und einer Kupplungsvorrichtung, vorgesehen zwischen der ersten Hydraulikleitung (4) und dem Stoßdämpfer (2, 51), wobei der zweite Stoßdämpfer eine zweite Hydraulikleitung (57) aufweist,
**dadurch gekennzeichnet, dass**
die Kupplungsvorrichtung (58) erste und zweite Kupplungsteile (56, 65) ausweist. die vorgesehen sind, um an den jeweiligen Enden der Hydraulikleitungen (4, 57), die verbunden werden sollen, befestigt zu werden und miteinander zum Herstellen einer Fluidverbindung zwischen den Hydraulikleitungen (4, 57) verbunden werden sollen, wobei die ersten und die zweiten Kupplungsteile (56, 65) Verschlußteile (27) aufweisen, vorgesehen zum lösbaren Verschließen der jeweiligen Enden der Hydraulikleitungen (4, 57), wobei eines der Verschlußteile (27) koaxial ausgerichtet ist mit und gegenüberliegend zu seiner zugehörigen Hydraulikleitung (57), während das andere Verschlußteil (27) quer zu seiner zugehörigen Hydraulikleitung (4) **quer angeordnet ist**

7. Hydrauliksystem für ein Fahrzeug nach Anspruch 6, **dadurch gekennzeichnet, dass** die ersten und die zweiten Kupplungsteile (56, 65) derart lösbar miteinander verbunden sind, dass das zweite Kupplungsteil, das verbunden wird mit einem der Verschlußteile (27), innerhalb eines ersten zylindrischen Abschnittes (23) aufgenommen ist, der einstückig mit einem zweiten zylindrischen Abschnitt (64) ist, der das andere Verschlußteil (27) enthält, wobei eine Fluidverbindung über Öffnungen (56a) hergestellt ist, die in dem zweiten Kupplungsteil (56) vorgesehen sind und sich in einen Hohlraum (66) innerhalb des ersten zylindrischen Abschnittes (23) öffnet und in eine Hydraulikleitung (57) öffnen, wobei der Hohlraum (66) in Fluidverbindung mit der anderen Hydraulikleitung (4) ist.

8. Hydrauliksystem für ein Fahrzeug nach Anspruch 6 oder 7, **dadurch gekennzeichnet, dass** die Verschlußteile (27) innerhalb der Kupplungsteile (65, 56) verschraubbar und mit geneigten Oberflächen (27a) versehen sind, angepasst um mit den jeweiligen Sitzoberflächen (32), vorgesehen an den Kupplungsteilen (65, 56) in Kontakt zu kommen, zum Verschließen der jeweiligen Enden der Hydraulikleitungen (4, 57).

9. Hydrauliksystem für ein fahrzeug nach zumindest einem der vorhergehenden Ansprüche 6 bis 8, **dadurch gekennzeichnet, dass** nach außen weisenden Enden der Verschlußteile (27) durch Kappen (36) verschließbar sind, wobei die Verschlußteile (27) durch die Kappen (36) nur verschließbar sind, wenn die Verschlußteile (27) in ihrer offenen Position sind.

10. Hydrauliksystem für ein Fahrzeug nach zumindest einem der vorhergehenden Ansprüche 6 bis 9 **dadurch gekennzeichnet, dass** die ersten und zweiten Kupplungsteile (56, 65) miteinander durch eine Befestigungsschraube (69) verbunden sind.

11. Hydrauliksystem für ein Fahrzeug nach zumindest einem der vorhergehenden Ansprüche 6 bis 10, **gekennzeichnet durch** einen Druckregler (3), der mit der ersten Hydraulikleitung (4) oder innerhalb einer zweiten Hydraulikleitung (5) verbunden ist.

12. Hydrauliksystem für ein Fahrzeug nach Anspruch 11, **dadurch gekennzeichnet, dass** der Druckregler (3) einen freien Kolben (13) aufweist, der gleitbar innerhalb eines Zylinders (12), der das Innere des Zylinders (12) in eine Hochdruckgaskammer (14) und eine Hydraulikfluid- Kammer (16) unterteilt, enthalten ist, wobei die Hydraulikleitungen (4; 5) mit der Hydraulikfluidkammer (16) verbunden sind.

13. Hydrauliksystem für ein Fahrzeug nach Anspruch 12, **dadurch gekennzeichnet, dass** der freie Kolben (13) mit einem einstückig gebildeten Hilfskolben (15) auf der Seite der Hydraulikfluidkammer versehen ist, der die Hydraulikfluidkammer in eine erste Kammer (16), verbunden mit einer Hydraulikleitung (4, 5), und eine zweite Kammer (17), verbunden mit der anderen Hydraulikleitung (4, 5), unterteilt.

14. Verfahren zum Installieren eines Hydrauliksystems an einem Fahrzeug nach zumindest einem der vorhergehenden Ansprüche 6 bis 13, mit den Schritten von:
a) Zusammenbauen des Hydrauliksystems auf einer Fertigungslinie getrennt von dem Fahrzeug.
b) Bewegen aller Verschlußteile (27) in ihre Öffnungsposition und Füllen des Hydrauliksystems mit Hydraulikfluid.
c) Ausführen von Funktionsprüfungen und Einstellen der Dämpfungsrate des Stoßdämpfers (51).
d) Bewegen aller Verschlußteile (27) in ihre geschlossene Position und Trennen der jeweiligen Kupplungsteile (65, 56) voneinander, wodurch
alle Teile des Hydrauliksystems mit Hydraulikfluid gefüllt und jeweils eingestellt sind, und
e) Installieren der Teile an einem Fahrzeug und Verbinden der jeweiligen Kupplungsteile (65, 56) miteinander und Öffnen der jeweiligen Verschlußteile (27).

15. Verfahren nach Anspruch 14, wobei ein Druckregler (3) mit der ersten Hydraulikleitung (4), oder innerhalb der zweiten Hydraulikleitung (5) verbunden ist, wobei der Druckregler (3) einen freien Kolben (13) aufweist, gleitbar innerhalb eines Zylinders (12) aufgenommen ist, der das Innere des Zylinders (12) in eine Hochdruckgaskammer (14) und eine Hydraulikfluidkammer (16) unterteilt, wobei die Hydraulikleitungen (4, 5) mit der Hydraulikfluidkammer (16) verbunden sind, **dadurch gekennzeichnet, dass** der Schritt d) dadurch ausgeführt wird, dass das Verschlußteil (27) auf der Seite des Stoßdämpfers zuerst geschlossen wird und anschließend das Verschlußteil (27) auf der anderen Seite, um die Hochdruckgaskammer (14) vorzuspannen, und dass der Schritt e) dadurch ausgeführt wird, dass das Verschlußteil (27) auf der Seite des Stoßdämpfers zuerst geöffnet wird und dann das Verschlußteil (27) auf der anderen Seite.

16. Verfahren nach Anspruch 15, **dadurch gekennzeichnet, dass** in dem Schritt e) nach dem Öffnen des Verschlußteiles (27) auf der Seite des Stoßdämpfers das jeweilige Kupplungsteil entlüftet wird.

## Revendications

1. Dispositif de raccordement (58) pour raccorder de façon désolidarisable des tuyauteries hydrauliques (4, 57) comprenant des premiers et deuxièmes organes de raccordement(56, 65) adaptés pour être fixés à des extrémités respectives des tuyauteries hydrauliques (4, 57) et pour être connectés l'un à l'autre afin d'établir une connexion fluidique entre lesdites tuyauteries hydrauliques (4, 57), lesdits premiers et deuxièmes organes de raccordement (56, 65) comprenant des organes formant bouchon (27), adaptés pour fermer de façon désolidarisable lesdites extrémités respectives des tuyauteries hydrauliques (4, 57), dans lequel l'un des organes formant bouchon (27) est agencé transversalement par rapport à sa tuyauterie hydraulique (4) associée, et
**caractérisé en ce que**
l'autre organe formant bouchon (27) respectif est aligné coaxialement avec sa tuyauterie hydraulique (57) associée et agencé à son opposé.

2. Dispositif de raccordement selon la revendication 1, **caractérisé en ce que** lesdits premiers et deuxièmes organes de raccordement (65, 56) sont connectés de façon désolidarisable l'un à l'autre, de manière que le deuxième organe de raccordement (56), qui est associé à l'un desdits organes formant bouchon (27) soit logé dans une première partie cylindrique (23) réalisée d'une seule pièce avec une deuxième partie cylindrique (64) qui loge ledit organe formant bouchon (27), dans lequel une connexion fluidique est établie via des ouvertures (56a) ménagées dans ledit deuxième organe de raccordement (56), débouchant dans une cavité (66) à l'intérieur de ladite première partie cylindrique (23) et débouchant dans une tuyauterie hydraulique (57), dans lequel ladite cavité (66) est en connexion fluidique avec l'autre tuyauterie hydraulique (4).

3. Dispositif de raccordement selon la revendication 1 ou 2, **caractérisé en ce que** lesdits organes formant bouchon (27) sont susceptible d'être vissés dans lesdits organes de raccordement (65, 56) et sont munis de surfaces (27a) coniques, adaptées pour venir en contact avec des surfaces formant siège (32) respectives, ménagées dans lesdits organes de raccordement (65, 56), afin de fermer les extrémités respectives desdites tuyauteries hydrauliques (4, 57).

4. Dispositif de raccordement selon au moins l'une des revendications 1 à 3 précédentes, **caractérisé en ce que** les extrémités, tournées vers l'extérieur, desdits organes formant bouchon (27) sont susceptibles d'être fermées par des capuchons (36), dans lequel lesdits organes formant bouchon (27) sont susceptibles d'être fermés uniquement par lesdits capuchons (36), lorsque lesdits organes formant bouchon (27) sont à leur position ouverte.

5. Dispositif de raccordement selon au moins l'une des revendications 1 à 4 précédentes, **caractérisé en ce que** lesdits premier et deuxième organes de raccordement (65, 56) sont connectés l'un à l'autre par un boulon de fixation (69).

6. Système hydraulique pour un véhicule, comprenant au moins un absorbeur de choc (2, 51) connecté à une première tuyauterie hydraulique (4) et un dispositif de raccordement prévu entre ladite première tuyauterie hydraulique (4) et ledit absorbeur de choc (2, 51), ledit absorbeur de choc comprenant une deuxième tuyauterie hydraulique (57),
**caractérisé en ce que**
ledit dispositif de raccordement (58) comprend des premiers et deuxièmes organes de raccordement (56, 65) adaptés pour être fixés aux extrémités respectives des tuyauteries hydrauliques (4, 57) devant être connectées et à connecter l'un à l'autre pour établir une connexion fluidique entre lesdites tuyauteries hydrauliques (4, 57), lesdits premiers et deuxièmes organes de raccordement (65, 56) comprenant des organes formant bouchon (27) adaptés pour fermer de façon désolidarisable lesdites extrémités respectives des tuyauteries hydrauliques (4, 57), dans lequel l'un desdits organes formant bouchon (27) est aligné coaxialement à de la tuyauterie hydraulique (57) associée et agencé à son opposé, tandis que l'autre organe formant bouchon (27) est agencé transversalement à sa tuyauterie hydraulique (4) associée.

7. Système hydraulique pour un véhicule selon la revendication 6, **caractérisé en ce que** lesdits premiers et deuxièmes organes de raccordement (65, 56) sont reliés de façon désolidarisable l'un à l'autre de manière que le deuxième organe de raccordement (56), qui est associé à l'un desdits organes formant bouchon (27), soit logé dans une première partie cylindrique (23) munie, d'un seul tenant, d'une deuxième partie cylindrique (64) logeant l'autre organe formant bouchon (27), dans lequel une connexion fluidique est établie via des ouvertures (56a) ménagées dans ledit deuxième organe de raccordement (56), débouchant en une cavité (66) à l'intérieur de ladite première partie cylindrique (23) et débouchant dans une tuyauterie hydraulique (57), dans lequel ladite cavité (66) est en connexion fluidique avec l'autre tuyauterie hydraulique (4).

8. Système hydraulique pour un véhicule selon la revendication 6 ou 7, **caractérisé en ce que** lesdits organes formant bouchon (27) sont vissables à l'intérieur desdits organes de raccordement (65, 56) et sont pourvus de surfaces (27a) coniques, adaptées pour venir en contact avec des surfaces formant siège (32) respectives, munies desdits organes de raccordement (65, 56), pour fermer les extrémités respectives desdites tuyauteries hydrauliques (4, 57).

9. Système hydraulique pour un véhicule selon au moins l'une des revendications 6 à 8 précédentes, **caractérisé en ce que** les extrémités, tournées vers l'extérieur, desdits organes formant bouchon (27) sont susceptibles d'être fermées par des capuchons (36), dans lequel lesdits organes formant bouchon (27) sont susceptibles d'être fermés uniquement par lesdits capuchons (36) lorsque lesdits organes formant bouchon (27) sont à la position ouverte.

10. Système hydraulique pour un véhicule selon au moins l'une des revendications 6 à 9 précédentes, **caractérisé en ce que** lesdits premiers et deuxièmes organes de raccordement (65, 56) sont susceptibles d'être connectés l'un à l'autre par un boulon de fixation (69).

11. Système hydraulique pour un véhicule selon au moins l'une des revendications 6 à 10 précédentes, **caractérisé par** un régulateur de pression (3) relié à ladite première tuyauterie hydraulique (4) ou monté dans une deuxième tuyauterie hydraulique (5).

12. Système hydraulique pour un véhicule selon la revendication 11, **caractérisé en ce que** ledit régulateur de pression (3) comprend un piston libre (13) logé à coulissement dans un cylindre (12) divisant l'intérieur dudit cylindre (12) en une chambre à gaz à haute pression (14) et une chambre à fluide hydraulique (16), de manière que lesdites tuyauteries hydrauliques (4; 5) soient connectées à ladite chambre à fluide hydraulique (16).

13. Système hydraulique pour un véhicule selon la revendication 12, **caractérisé en ce que** ledit piston libre (13) est muni d'un piston auxiliaire (15) formé d'un seul tenant, du côté de la chambre à fluide hydraulique, divisant ladite chambre à fluide hydraulique en une première chambre (16), reliée à une tuyauterie hydraulique (4; 5), et une deuxième chambre (17), reliée à l'autre tuyauterie hydraulique (4; 5).

14. Procédé d'installation d'un système hydraulique sur un véhicule selon au moins l'une des revendications 6 à 13 précédentes, comprenant les étapes consistant à :
a) assembler ledit système hydraulique sur une chaîne d'usine, séparée du véhicule,
b) déplacer la totalité des organes formant bouchon (27) à leur position d'ouverture et remplir le système hydraulique par du fluide hydraulique,
c) exécuter des tests fonctionnels et ajuster le taux d'amortissement dudit absorbeur de choc (51),
d) déplacer la totalité des organes formant bouchon (27) à leur position fermée et séparer les organes de raccordement (65, 56) respectifs les uns des autres, de manière que toutes les parties dudit système hydraulique soient remplies par du fluide hydraulique et soient respectivement ajustées, et
e) installer lesdites parties sur un véhicule et connecter les organes de raccordement (65, 56) respectifs les uns aux autres et ouvrir les organes formant bouchon (27) respectifs.

15. Procédé selon la revendication 14, dans lequel un régulateur de pression (3) est connecté à ladite première tuyauterie hydraulique (4) ou dans ladite deuxième tuyauterie hydraulique (5), ledit régulateur de pression (3) comprenant un piston libre (13) logé à coulissement dans un cylindre (12) en divisant l'intérieur dudit cylindre (12) en une chambre à gaz à haute pression (14) et une chambre à fluide hydraulique (16), dans lequel lesdites tuyauteries hydrauliques (4; 5) sont connectées à ladite chambre à fluide hydraulique (16), **caractérisé en ce que** l'étape d) est mise en oeuvre de manière que l'organe formant bouchon (27) situé sur le côté absorbeur de choc soit fermé le premier, puis l'organe formant bouchon (27) situé de l'autre côté, pour solliciter ladite chambre à gaz à haute pression (14), et **en ce que** l'étape e) est mise en oeuvre de manière que l'organe formant bouchon (27) situé sur l'absorbeur de choc soit ouvert le premier et, ensuite, l'organe formant bouchon (27) situé de l'autre côté.

16. Procédé selon la revendication 15, **caractérisé en ce que**, à l'étape e), après avoir ouvert l'organe formant bouchon (27) du côté de l'absorbeur de choc, l'organe de raccordement respectif est aéré.
